Europäisches Patentamt

European Patent Office

Office européen des brevets

(19)

(11) Numéro de publication : **0 429 357 B1**

(12) ## FASCICULE DE BREVET EUROPEEN

(45) Date de publication du fascicule du brevet :
**19.01.94 Bulletin 94/03**

(51) Int. Cl.⁵ : **F16L 11/16,** F16L 11/08, F16L 11/10

(21) Numéro de dépôt : **90403281.0**

(22) Date de dépôt : **21.11.90**

(54) **Conduite tubulaire flexible.**

(30) Priorité : **21.11.89 FR 8915272**

(43) Date de publication de la demande :
**29.05.91 Bulletin 91/22**

(45) Mention de la délivrance du brevet :
**19.01.94 Bulletin 94/03**

(84) Etats contractants désignés :
**DE DK ES FR GB IT NL**

(56) Documents cités :
**FR-A- 1 367 139**
**FR-A- 2 569 462**
**US-A- 3 251 612**

(73) Titulaire : **COFLEXIP**
**23 Avenue de Neuilly**
**F-75116 Paris (FR)**

(72) Inventeur : **Jung, Patrice**
**Hameau de Caveaumont**
**F-76940 La Mailleraye (FR)**
Inventeur : **Le Bail, Guy**
**29, rue Sacha Guitry**
**F-76480 Yaniville (FR)**

(74) Mandataire : **Nony, Michel et al**
**Cabinet NONY & CIE 29, rue Cambacérès**
**F-75008 Paris (FR)**

EP 0 429 357 B1

## Description

La présente invention est relative à une conduite tubulaire flexible du type comportant au moins une couche tubulaire constituée par au moins une bande profilée, de section sensiblement en forme de S allongé, enroulée hélicoïdalement avec un faible pas et avec emboîtement des spires successives.

La société déposante fabrique et commercialise depuis de nombreuses années des conduites tubulaires flexibles de grande longueur, à résistance mécanique élevée, utilisables notamment pour le transport d'hydrocarbures, en particulier dans le cadre d'installations de production pétrolière sous-marines.

De telles conduites flexibles comportent en général une couche tubulaire constituée par une bande profilée à double agrafage, cette couche pouvant constituer la carcasse interne de la conduite flexible dans les conduites de type "ROUGH BORE", une armure destinée à fournir à la conduite tubulaire flexible une résistance importante à la pression interne et à la traction, une gaine intermédiaire d'étanchéité et le cas échéant une gaine extérieure de protection.

Dans les conduites de type "SMOOTH BORE" la gaine intermédiaire d'étanchéité est remplacée par une gaine ou tube intérieur d'étanchéité en matériau plastique ou élastomérique.

Pour réaliser de telles couches tubulaires, on déforme plastiquement un ruban métallique plat, tel qu'un feuillard en acier inoxydable de façon à réaliser une bande profilée de section agrafable, et on enroule la bande profilée hélicoïdalement avec un faible pas et avec emboîtement des spires successives. La flexibilité de la couche tubulaire est obtenue par l'existence d'un certain jeu axial entre les spires agrafées successives. La bande profilée présente une section formée d'une première et d'une seconde portées principales cylindriques coaxiales espacées radialement et réunies par une partie centrale inclinée par rapport à l'axe longitudinal de la conduite, chacune des première et seconde portées cylindriques principales étant réunie par une première et respectivement une seconde partie radiale convexe à une première et respectivement une seconde portée secondaire, l'une au moins desdites portées secondaires étant cylindrique, coaxiale par rapport aux portées principales et espacée radialement de celles-ci.

On connaît ainsi des conduites d'un premier type de construction comprenant une couche tubulaire constituée par une bande profilée dont les deux portées secondaires sont cylindriques, par exemple les tuyaux métalliques flexibles agrafés définis par la norme NF E-29-828.

Un jeu radial plus ou moins important peut exister entre les différentes portées en regard de sorte que la résistance à l'écrasement en sens radial est relativement faible.

Dans un second type de construction, la première portée secondaire est cylindrique tandis que la seconde portée secondaire est constituée par un tronçon axial concave dont la concavité est tournée à l'opposé de la seconde portée principale et qui constitue un prolongement d'extrémité de la partie radiale convexe qui prolonge ladite seconde portée principale.

Une illustration de ce type de couche tubulaire est donnée dans FR-A- 2 569 462, FR-A-2 559 920, ou FR-A-1367139.

Dans une variante de ce type de construction, il est prévu d'interposer un joint, notamment en cuivre ou en amiante, dans le repli formé entre le tronçon d'extrémité axial, concave et la première portée principale de la spire adjacente. Une illustration de ce type de couche tubulaire est donnée dans les normes NF-E-29-829, /-832 ou /-833.

Dans le type de construction comportant un tronçon axial concave, le contact entre la seconde portée secondaire d'une spire et la première portée principale de la spire adjacente doit normalement s'effectuer uniquement au niveau de la zone de transition entre la partie radiale convexe et le tronçon d'extrémité axial concave.

De ce fait, il a été constaté que la résistance à l'écrasement de la couche tubulaire formée et de la conduite tubulaire flexible incorporant cette couche peut se révéler insuffisante, lorsque les efforts mécaniques qu'elle doit supporter sont importants, notamment dans des applications où une pression importante est appliquée de l'extérieur sur la conduite. Ainsi, on peut citer le cas de conduites tubulaires flexibles utilisées pour le transport d'hydrocarbures en eaux profondes où règne une pression hydrostatique élevée, la couche tubulaire devant pouvoir résister à l'effet d'écrasement dû à la pression hydrostatique et aux effets induits des charges supportées par les armures de traction sollicitées par le poids considérable de la conduite.

Une condition nécessaire pour obtenir une résistance importante à l'écrasement, ainsi qu'un bon comportement dans le cas d'effets dynamiques, est que, d'une part, la couche tubulaire soit réalisée avec un emboîtement précis et sans jeu radial entre les portées en regard des spires adjacentes, et que, d'autre part, la section de la bande profilée ait une configuration réelle conforme à sa définition théorique sans présenter de défauts tels que des zones de courbure excessive. Dans la pratique, pour éviter le risque d'un jeu radial, on réalise habituellement les couches tubulaires avec un effet de serrage radial limité. Il résulte des tolérances très strictes ainsi imposées au produit réalisé que les fabrications industrielles doivent être exécutées avec un soin par-

2

ticulier qui augmente les coûts.

La présente invention se propose de réaliser une conduite tubulaire flexible qui présente notamment une résistance élevée à l'écrasement, tout en pouvant être réalisée avec des coûts de production réduits. Outre la réduction des coûts obtenue grâce à une fabrication plus aisée et plus rapide, la présente invention a également pour but de réduire le poids de la couche tubulaire, pour une résistance donnée à l'écrasement, ce qui permet, d'une part, de réduire le poids et le coût des matières premières utilisées pour la fabrication, et, d'autre part, de réaliser des conduites flexibles pouvant être utilisées dans des profondeurs d'eau plus importantes.

Dans la conduite tubulaire flexible selon l'invention la première portée secondaire de la bande profilée enroulée hélicoïdalement, est espacée radialement de la première portée cylindrique principale d'une distance telle qu'à l'état enroulé de la bande profilée, elle s'applique sensiblement sur toute sa longueur sur la seconde portée principale d'une spire adjacente; la seconde portée secondaire comporte un tronçon de raccordement à la seconde partie radiale convexe, un tronçon d'extrémité cylindrique ou légèrement conique et, entre lesdits tronçons, un tronçon intermédiaire en forme d'onde dont la concavité est tournée à l'opposé de la seconde portée principale, et la seconde portée secondaire est agencée de façon telle, qu'à l'état enroulé de la bande, ledit tronçon de raccordement de la seconde portée secondaire se trouve en appui sur la première portée principale de l'autre spire adjacente, et ledit tronçon d'extrémité de la seconde portée secondaire s'applique à son extrémité sur ladite première portée principale de l'autre spire adjacente. De préférence, le sommet du tronçon intermédiaire s'applique sur la première portée secondaire de ladite autre spire adjacente.

Le tronçon d'extrémité de la seconde portée secondaire est de préférence cylindrique et s'applique sensiblement sur toute sa longueur sur la première portée principale de l'autre spire adjacente. Ce tronçon d'extrémité peut néanmoins selon l'invention être légèrement conique, c'est-à-dire former avec l'axe de la conduite un angle inférieur à environ 10° et de préférence de l'ordre de 5°.

Ainsi, à l'état enroulé de la bande, il existe entre chacune des portées principales d'une spire et une portée principale de la spire adjacente, une structure d'appui résistant à l'écrasement du fait d'un appui double du tronçon d'extrémité et du tronçon de raccordement de la seconde portée secondaire sur la première portée principale de la spire adjacente, et de la rigidité à la flexion conférée par le tronçon intermédiaire en forme d'onde. Un appui du tronçon intermédiaire en forme d'onde contre la première portée secondaire de la spire adjacente elle-même en contact avec la seconde portée principale de la spire concernée, permet d'accroître encore la rigidité de la bande profilée en assurant un effet d'appui en voûte, la partie médiane du tronçon intermédiaire en forme d'onde pouvant présenter une section arrondie ou présenter une portée centrale cylindrique.

Selon l'invention, les longueurs du tronçon d'extrémité et du tronçon de raccordement de la seconde portée secondaire peuvent être quelconques et à la limite très faibles. Il importe seulement qu'il y ait un contact sans jeu de part et d'autre du tronçon intermédiaire en forme d'onde entre la seconde portée secondaire d'une spire et la première portée principale de la spire adjacente, et que la partie oblique à l'extrémité du tronçon intermédiaire en forme d'onde se raccorde progressivement et sensiblement tangentiellement au tronçon d'extrémité.

De manière avantageuse, les caractéristiques dimensionnelles de la bande profilée formant la couche tubulaire de la conduite tubulaire flexible selon l'invention sont les suivantes rapportées à l'épaisseur e de la bande ou au diamètre interne D de la couche tubulaire formée.

1) longueur b du tronçon d'extrémité de la seconde portée secondaire

$$b \geqq 0,5 \, e \text{ et de préférence}$$
$$0,5 \, e \leqq b \leqq 2 \, e$$

2) longueur a du tronçon intermédiaire en forme d'onde de la seconde portée secondaire

$$3 \, e \leqq a \leqq 8 \, e$$

3) hauteur d du tronçon intermédiaire en forme d'onde de la seconde portée secondaire

$$0,5 \, e \leqq d \leqq 3,5 \, e$$

4) longueur c du tronçon de raccordement de la seconde portée secondaire

$$e \leqq c \leqq 4 \, e$$

5) épaisseur h de la couche tubulaire formée par l'enroulement de là bande profilée, c'est-à-dire la distance radiale entre la face interne de la portée principale d'une spire constituant la surface intérieure de la couche tubulaire et la face externe de la portée principale de la spire adjacente constituant la surface extérieure de la couche tubulaire.

$$h \geqq 4,5 \, e$$

6) largeur l de la bande profilée, c'est-à-dire la distance mesurée en sens axial entre les sommets des portées radiales convexes de la bande

$$50 \, e \leqq l \leqq 100 \, e$$

7) pas moyen P de l'hélice formée par l'enroulement, c'est-à-dire la distance mesurée en sens axial entre les premières portées radiales convexes de deux spires successives, le jeu axial entre spires successives étant supposé égal à sa valeur moyenne.

$$0,05 \, D \leqq P \leqq 0,5 \, D$$

Le tronçon intermédiaire en forme d'onde présente une partie médiane de section arrondie ou comportant une portée centrale cylindrique encadrée par deux segments incurvés. Cette partie médiane, dont le sommet ou respectivement la portée centrale est, de préférence, en appui sur la première partie secondaire de la spire adjacente, est encadrée par deux parties latérales de transition. Ces deux parties de transition de forme incurvée, et dont le sens de courbure est opposé par rapport à celui de la partie médiane, ou respectivement celui des segments incurvés, se raccordent tangentiellement, respectivement, au tronçon d'extrémité et au tronçon de raccordement. La partie médiane se raccorde tangentiellement à chacune des deux parties latérales de transition avec, soit, de préférence, un point d'inflexion, soit un segment rectiligne de raccordement d'une longueur de préférence inférieure à 2 e. L'angle formé par la tangente au point d'inflexion ou le segment rectiligne par rapport à l'axe de la couche tubulaire est de préférence compris entre 45 et 80°.

Une bande profilée selon l'invention présente une résistance à l'écrasement particulièrement élevée lorsque le rayon de courbure de chacune des zones incurvées a la valeur la plus importante compatible avec les dimensions caractérisant la section de la bande profilée considérée. Des résultats intéressants ont été obtenus avec des valeurs du rayon de courbure dans les zones les plus fortement incurvées de l'ordre de 1,5e, le rayon de courbure étant compté à la fibre neutre, mais il est préférable que, en tout point de la section, le rayon de courbure ne soit pas inférieur à cette valeur.

La bande profilée selon l'invention peut être réalisée par les techniques habituelles de formage à froid à l'aide de mollettes de formage et peut en particulier être formée en continu dans un procédé de spiralage en continu pour former des conduites tubulaires flexibles tel que décrit dans le brevet FR-A 2 555 920 de la société déposante.

Dans le but de mieux faire comprendre l'invention, on va maintenant en décrire à titre d'exemple en aucune manière limitatif un mode de réalisation en se référant au dessin annexé dans lequel :

- la figure 1 est une vue schématique éclatée partiellement en coupe longitudinale d'un premier mode de réalisation de conduite tubulaire flexible selon l'invention et,
- la figure 2 est une vue analogue d'un second mode de réalisation de conduite'tubulaire flexible selon l'invention.
- la figure 3 représente un détail en coupe de la couche tubulaire constituée par une bande profilée de la conduite de la figure 1.
- les figures 4 à 7 sont des vues analogues à la figure 3 de variantes de réalisation.

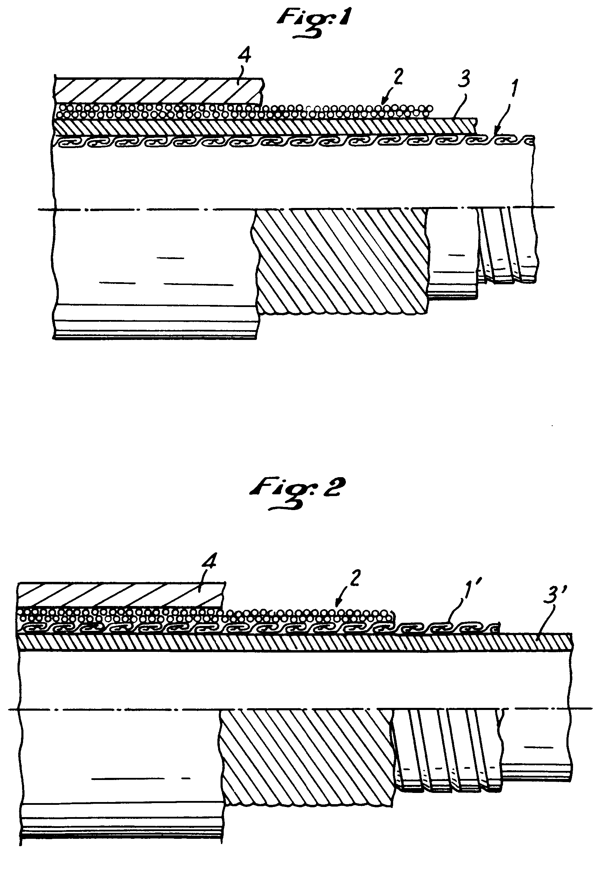

On a illustré sur la figure 1 une conduite tubulaire flexible de type "ROUGH BORE" incorporant une couche tubulaire 1 constituée par une bande profilée enroulée hélicoïdalement avec un faible pas et avec emboîtement des spires successives.

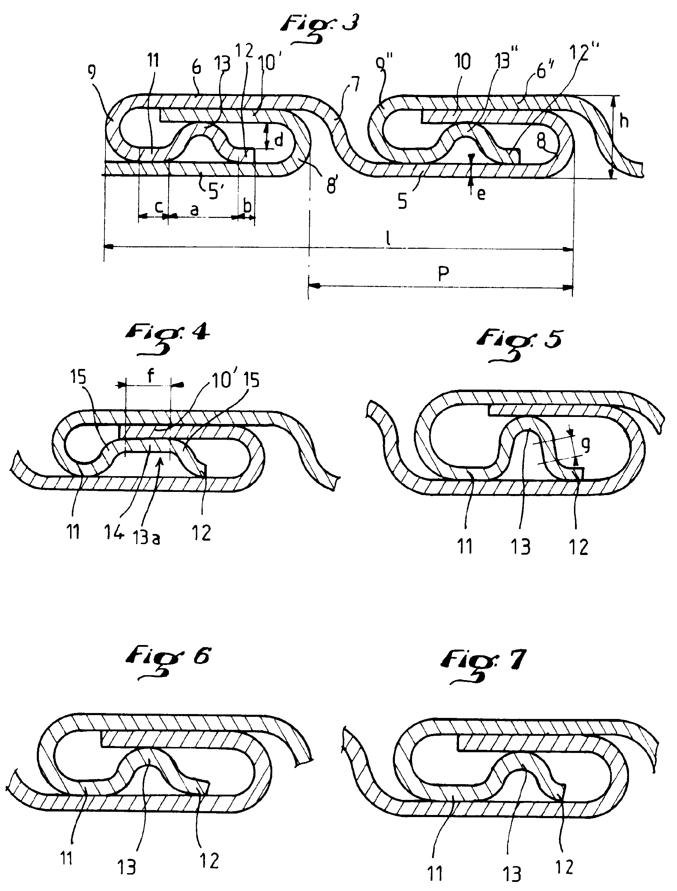

La forme de section de la bande profilée sera décrite plus loin en référence avec la figure 3.

Cette couche 1 est dans l'exemple illustré une carcasse intérieure destinée à assurer la résistance de la conduite aux effets d'écrasement.

La conduite comporte, outre la couche 1, une armure 2 de résistance à la traction et à la pression intérieure constituée de préférence d'une ou plusieurs paires de nappes croisées de fils d'armage métalliques ou en matériaux composites résistant à la traction. Enfin, la conduite tubulaire comprend une gaine interne d'étanchéité 3, disposée entre les couches 1 et 2 et une gaine externe 4.

Dans la structure de type "SMOOTH BORE", illustrée à la figure 2, il est prévu un tube interne 3' d'étanchéité qui s'appuie sur la couche tubulaire 1' constituée par l'enroulement d'une bande profilée et qui assure d'une part la résistance à l'écrasement et d' autre part la résistance à la composante circonférentielle induite par la pression interne.

On se réfère maintenant à la figure 3.

La couche 1 est constituée par un enroulement hélicoïdal d'une bande profilée comme illustré à la figure 3, cette bande étant réalisée en tout matériau métallique approprié aux utilisations envisagées, et apte à prendre la configuration désirée par déformation plastique, par exemple en acier inoxydable austénitique, austénoferritique ou ferritique, en acier au carbone notamment de grade élevé, en acier galvanisé ou en des alliages présentant de bonnes caractéristiques de résistance à la corrosion, tels que l'INCONEL, ou des alliages d'aluminium.

La figure 3 représente la section d'une spire de la bande profilée à l'état enroulé ainsi que de manière fragmentaire la section des deux spires adjacentes à celle-ci.

En section, la bande profilée d'une épaisseur e présente une première portée principale cylindrique 5 réunie à une seconde portée principale cylindrique 6 par une partie centrale inclinée 7. Les portées principales 5 et 6 sont prolongées par des parties radiales convexes 8 et respectivement 9. La partie radiale 8 est prolongée par une première portée secondaire 10 concentrique à la portée 5. La seconde partie radiale 9 se prolonge par une seconde portée secondaire constituée par un tronçon cylindrique de raccordement 11 et un tronçon cylindrique d'extrémité 12 entre lesquels est disposé un tronçon intermédiaire en forme d'onde 13 dont la concavité est tournée à l'opposé de la seconde portée principale 6.

Dans le dessin, les portées correspondantes des spires adjacentes ont été désignées par les mêmes chiffres de référence suivis des indices' et respectivement ".

La hauteur h de la couche tubulaire, la configuration et les dimensions en longueur, a, et en hauteur, d, du tronçon intermédiaire en forme d'onde 13 sont déterminées de manière que, comme illustré sur le dessin, à l'état enroulé de la bande, les tronçons cylindriques 11 et 12 s'appliquent sensiblement sur toute leur longueur, c et respectivement b, sur la première portée principale 5' d'une spire adjacente et, de préférence, le sommet de la partie médiane arrondie du tronçon intermédiaire 13 s'applique sur la première portée secondaire 10' de ladite spire adjacente.

De plus, comme on le voit sur la figure 3, la première portée secondaire cylindrique 10 est espacée radialement de la première portée cylindrique principale 5 de manière à s'appliquer sans jeu sensiblement sur toute sa longueur sur la seconde portée principale cylindrique 6" de l'autre spire adjacente.

Dans le mode de réalisation de la figure 4, la partie médiane du tronçon intermédiaire 13a comporte une portée cylindrique 14 d'appui sur toute sa longueur f sur la première portée secondaire 10' de la spire adjacente. La portée cylindrique 14 est prolongée par deux segments de section incurvée 15 se raccordant tangentiellement directement ou par l'intermédiaire de segments rectilignes (non représentés) aux parties latérales de transition avec les tronçons 11 et 12.

Dans le cas de la figure 4, les longueurs b et c du tronçon cylindrique d'extrémité 12 et du tronçon de raccordement 11 sont réduites au minimum, pratiquement nulles, mais les deux parties latérales de transition du tronçon intermédiaire 13a sont régulièrement incurvées et viennent se raccorder tangentiellement sur la face en regard de la première portée principale 5' de la spire adjacente.

Dans le mode de réalisation de la figure 5, il est prévu un segment rectiligne de raccordement, de longueur g, entre la partie médiane 14 incurvée du tronçon intermédiaire et chacune des deux parties latérales de transition.

Dans le mode de réalisation de la figure 6, le tronçon d'extrémité 12 de la seconde portée secondaire est légèrement conique, la figure 7 illustrant une variante de réalisation dans laquelle la longueur de ce tronçon d'extrémité est très courte, proche d'une valeur nulle.

Dans la description précédente de la bande profilée, il doit être clair que les mots : première (première portée (etc...) et "seconde" (seconde portée etc) n'ont qu'une signification relative, l'une par rapport à l'autre, en ce sens que, la première et la seconde portée principale d'une même spire étant radialement espacées, la couche tubulaire peut être formée à partir de la bande profilée conforme à la description indifféremment, au choix, de deux façons différentes.

(i) la "première" portée principale peut se trouver à L'intérieur, la plus proche de l'axe du tube flexible par rapport à la seconde portée principale;le tronçon intermédiaire en forme d'onde 13 formé par la seconde portée secondaire se trouve alors à l'intérieur du tube par rapport à la première portée secondaire 10' de la spire adjacente qui lui fait face.

(ii) la première portée principale se trouve à l'extérieur, le tronçon intermédiaire en forme d'onde se trouvant alors également à l'extérieur.

En outre, la couche tubulaire peut être réalisée par l'enroulement d'une seule bande profilée dont les spires successives s'emboîtent mutuellement les unes dans les autres. Il est possible, en variante de la réaliser en enroulant côte à côte deux bandes profilées adjacentes, chaque spire d'une bande se trouvant agrafée de part et d'autre par les deux spires de l'autre bande qui l'encadrent ; cette variante peut être intéressante dans certains cas, par exemple dans le cas où la largeur de la bande agrafée est relativement faible par rapport au diamètre du tube flexible formé.

On va décrire ci-après deux exemples de conduites tubulaires flexibles comportant une couche tubulaire formée à l'aide de bandes profilées présentant la section illustrée à la figure 3 avec les caractéristiques dimensionnelles reportées sur le tableau 1 suivant.

La couche tubulaire est réalisée par enroulement d'une bande profilée réalisée en acier inoxydable austénitique de type AISI 304.

| TABLEAU 1 | | |
|---|---|---|
| | Exemple 1 | Exemple 2 |
| **Feuillard utilisé** pour former la bande profilée | | |
| – Epaisseur    e mm | 0,7 | 1,5 |
| – Largeur      L mm | 40 | 113 |
| **Bande profilée** | | |
| – d mm | 1,4 | 4,6 |
| – a mm | 4,0 | 10,4 |
| – b mm | 0,7 | 1,5 |
| – c mm | 0,9 | 2,3 |
| – l mm | 23,0 | 60,2 |
| **Couche tubulaire formée** | | |
| – h mm | 4,2 | 10,6 |
| – Diamètre D mm | 101,6 (4in) | 304,8 (12in) |
| – Pas P mm | 13,3 | 33,4 |
| – Poids kg/m | 5,5 | 37,7 |
| – Résistance à l'écrasement (bars) | 79 | 51 |

Le poids unitaire indiqué ici est le poids de la couche tubulaire avec le pas moyen pour une longueur de un mètre selon l'axe du tube formé.

La résistance à l'écrasement indiquée correspond à la limite de déformation permanente de la couche tubulaire formée sous l'effet d'un champ de pression extérieure uniforme. Cette valeur est en relation directe avec la profondeur d'eau maximale d'utilisation de la conduite flexible en fonction de la pression hydrostatique correspondante, en supposant la pression interne de la conduite nulle, et en ne tenant pas compte de l'éventuel renforcement de la structure du flexible dû aux autres éléments d'armage de cette structure.

Les avantages de la bande profilée selon l'invention peuvent être appréciés en comparant les exemples 1 et 2 aux exemples comparatifs 1a et 2a respectivement, reportés sur le tableau 2 suivant et relatifs à des bandes profilées réalisées, ainsi qu'il est couramment pratiqué, avec une seconde portée secondaire présentant simplement un tronçon axial concave, tel qu'illustré par exemple dans FR-A-2 555 920.

| TABLEAU 2 | | |
|---|---|---|
| | Exemple la | Exemple 2a |
| **Feuillard utilisé** pour former la bande profilée | | |
| – Epaisseur    e mm | 0,7 | 2 |
| – Largeur      L mm | 28 | 80 |
| **Bande profilée** | | |
| – largeur      l mm | 16,0 | 42,7 |
| **Couche tubulaire formée** | | |
| – h mm | 3,5 | 10 |
| – Diamètre   D mm | 101,6 (4in) | 304,8 (12in) |
| – Pas  P mm | 9,7 | 27,6 |
| – Poids  kg/m | 5,3 | 45,3 |
| – Résistance à l'écrasement (bars) | 60,8 | 52 |

Réalisé avec un feuillard de largeur L = 28 mm ayant la même épaisseur 0,7 mm, de manière à avoir un poids de 5,3 Kg/m à peu près égal à l'Exemple 1 pour le même diamètre 101,6mm, l'exemple la présente une largeur de bande profilée de 16mm, avec une épaisseur h de la couche tubulaire de 3,5 mm, soit 5 fois l'épaisseur, au lieu de 4,2 mm pour l'exemple 1.

On a constaté que l'exemple la offre une résistance à l'écrasement de seulement 60,8 bars, contre 79 pour l'exemple 1, une conduite utilisant la bande profilée selon l'invention peut donc, dans le cas présent, être utilisée dans des profondeurs d'eau plus importantes d'environ 30 % sans augmentation de la quantité de matériau utilisée pour réaliser la couche tubulaire constituant sa carcasse intérieure.

En outre, le pas est de seulement 9,7 mm pour l'exemple 1a, au lieu de 13,3 mm. La vitesse à laquelle le tube flexible métallique est produit par les spiraleuses habituellement utilisées étant normalement proportionnelle au pas de l'hélice formée par la bande agrafée, la durée de fabrication en continu d'un tube selon l'invention est donc, dans ce cas, 27 % plus courte que pour le tube équivalent selon l'art connu, d'où une réduction importante du coût de fabrication.

Dans le cas de l'exemple comparatif 2a, pour obtenir une résistance à l'écrasement de 52 bars sensiblement égale à celle de l'exemple 2, il est nécessaire de porter l'épaisseur du feuillard à 2 mm au lieu de 1,5 mm, avec une largeur L de 80 mm.

L'épaisseur h de la couche tubulaire est de 10 mm, voisine de celle de l'exemple 1, mais elle représente seulement 5 fois la valeur de l'épaisseur e de la bande profilée, au lieu de plus de 7 pour l'exemple 1. Le poids du tube formé passant ainsi de 37,7 à 45,3 Kg/m,cette augmentation de 20 % entraîne une aggravation du coût de fabrication particulièrement sensible dans le cas des tubes de diamètre relativement important, tels que les exemples 2 et 2a, pour lesquels la dépense en matériaux utilisés est prédominante dans le coût total de fabrication.

En outre, le pas étant de 27,6 mm dans l'exemple 2a au lieu de 33,4 mm, la durée de fabrication est 21 % plus longue. Globalement, à résistance égale, la bande tubulaire formée par la bande profilée de l'exemple 2a est environ 20 % plus coûteuse que celle de l'exemple 1. Par ailleurs, l'augmentation de 20 % du poids impose une réduction dans la profondeur d'eau maximale d'utilisation, puisque celle-ci est conditionnée par le poids total de conduite suspendu depuis la surface par rapport à la limite de traction dans le flexible admissible.

Entre autres avantages, la bande profilée selon l'invention peut être optimisée de façons variées, en fonction de la situation. Dans certains cas, on peut dimensionner la bande profilée avec un pas d'enroulement beaucoup plus important que ce que permettent les profils connus de bande profilée, en jouant sur la largeur du feuillard utilisé et sur la largeur de la bande profilée et ceci sans alourdir ni affaiblir la structure ; cette possibilité est particulièrement intéressante dans le cas des tubes de petit diamètre, 25 à 50 mm par exemple. En alternative, on peut choisir de réduire au minimum le poids de la structure pour une résistance à l'écrasement donnée, en jouant sur l'augmentation de l'épaisseur h de la couche tubulaire ; cette possibilité que présente la bande profilée selon l'invention par rapport aux produits selon l'art connu est particulièrement intéressante pour minimiser le coût de fabrication, spécialement dans le cas des diamètres relativement importants, pouvant atteindre 250 à 500 mm par exemple, ou dans le cas où des matériaux très coûteux doivent être utilisés, tels que l'Inconel, en général pour améliorer la résistance à la corrosion. L'optimisation du rapport entre la résistance à l'écrasement et le poids est en outre d'un intérêt considérable dans le cas des tubes flexibles destinés aux grandes profondeurs d'eau.

Sur la base des résultats des importants travaux d'étude théorique et d'essais sur prototype consacrés à étudier le comportement et les possibilités d'utilisation de la bande profilée selon l'invention, il semble que les améliorations observées sont dues, dans une large mesure, à l'augmentation de rigidité que lui confère sa forme particulière. La rigidité importante ainsi obtenue permet d'augmenter sensiblement aussi bien les rapports l/e que h/e. En particulier, une valeur plus élevée de la hauteur relative h/e entraîne une augmentation considérable de la rigidité à la flexion de la bande profilée, et, par conséquent, de la résistance de la couche tubulaire à l'écrasement telle qu'elle a été constatée. Des résultats particulièrement intéressants ayant été obtenus avec un rapport h/e > 5, il convient de noter qu'il n'existe pas, à la connaissance de la déposante, de bande profilée agrafée utilisable dans les structures de flexibles telles que visées par l'invention, et présentant un rapport h/e supérieur à 5.

Par ailleurs, les fabrications expérimentales de prototype ont montré, d'une façon surprenante, que les bandes profilées selon l'invention ainsi produites par les machines habituelles de fabrication industrielle présentent une qualité de forme remarquable, supérieure à celle obtenue avec les profils connus, et ceci sans qu'il soit nécessaire d'obérer les coûts de fabrication en prenant des précautions particulières.

Ainsi, les couches tubulaires constituées par une bande profilée selon l'invention peuvent être utilisées comme l'un des éléments de renforcement de conduites flexibles dont l'étanchéité est assurée par un tube interne ou une gaine en matériau plastique ou élastomérique. Elles peuvent en particulier constituer la carcasse interne des flexibles du type "ROUGH BORE". Elles peuvent également être disposées à l'extérieur du flexible pour servir d'organe de protection mécanique. Elles peuvent encore constituer, par exemple, la voûte de résistance aux effets circonférentiels de la pression interne des conduites du type "SMOOTH BORE".

Mais elles peuvent encore constituer à elles seules, des conduites tubulaires -flexibles du type "tuyaux métalliques flexibles" tels que ceux décrits par les normes NF citées ci-dessus, éventuellement complétées par des joints logés dans le repli formé par le tronçon intermédiaire en forme d'onde.

Toutes autres applications connues des conduites tubulaires métalliques flexibles sont encore envisageables, la conduite flexible peuvent être réalisée à partir de la couche tubulaire formée par la bande profilée, par exemple, en enveloppant la couche tubulaire par une gaine plastique ou élastomérique, ou en la disposant autour d'un tube interne plastique ou élastomérique.

## Revendications

1. Conduite tubulaire flexible comportant au moins une couche tubulaire constituée par au moins une bande profilée de section sensiblement en forme de S allongé, enroulée hélicoïdalement avec un faible pas et avec emboîtement des spires successives, ladite bande profilée présentant une section formée d'une première (5) et d'une seconde (6) portées principales cylindriques coaxiales, espacées radialement et réunies par une partie centrale (7) inclinée par rapport à l'axe longitudinal de la conduite, chacune des première et seconde portées cylindriques principales étant réunie par une première partie radiale convexe (8) à une première portée secondaire cylindrique (10) et par une seconde partie radiale convexe (9) à une seconde portée secondaire (11, 12, 13), et la première portée secondaire étant espacée radialement de la première portée cylindrique principale d'une distance telle qu'à l'état enroulé de la bande profilée, elle s'applique sensiblement sur toute sa longueur sur la seconde portée principale (6") d'une spire adjacente, la seconde portée secondaire comportant un tronçon (11) de raccordement à la seconde partie radiale convexe (9), un tronçon d'extrémité (12) et, entre lesdits tronçons (11,12), un tronçon intermédiaire en

EP 0 429 357 B1

forme d'onde (13) dont la concavité est tournée à l'opposé de la seconde portée principale (6), et la seconde portée secondaire (11,12,13) étant agencée de façon telle qu'à l'état enroulé de la bande, ledit tronçon de raccordement (11) se trouve en appui sur la première portée principale (5') de l'autre spire adjacente, caractérisée par le fait qu'à l'état enroulé de la bande, ledit tronçon d'extrémité (12) s'applique à son extrémité eloignée du tronçon intermédiaire sur ladite première portée principale (5') de l'autre spire adjacente.

2. Conduite tubulaire selon la revendication 1, caractérisée par le fait que le tronçon d'extrémité (12) est cylindrique et s'applique sensiblement sur toute sa longueur sur ladite première portée principale (5') de l'autre spire adjacente.

3. Conduite tubulaire selon la revendication 1, caractérisée par le fait que le tronçon d'extrémité est légèrement conique et prend appui à son extrémité sur la dite première portée principale (5') de l'autre spire adjacente.

4. Conduite tubulaire selon l'une quelconque des revendications 1 à 3, caractérisée par le fait que le sommet du tronçon intermédiaire (13) s'applique sur la première portée secondaire (10') de ladite autre spire adjacente.

5. Conduite tubulaire flexible selon l'une quelconque des revendications 1 et 4, caractérisée par le fait que la partie médiane dudit tronçon intermédiaire en forme d'onde (13) présente une section de forme arrondie et se raccorde tangentiellement à deux parties latérales de transition incurvées et présentant un sens de courbure inversé par rapport à celui de ladite partie médiane.

6. Conduite tubulaire flexible selon l'une quelconque des revendications 1 à 4, caractérisée par le fait que la partie médiane dudit tronçon intermédiaire en forme d'onde (13a) comporte une partie centrale cylindrique (14) en contact, de préférence sensiblement sur toute sa longueur (f), avec la première portée secondaire (10') de ladite autre spire adjacente, et qui est encadrée par deux segments incurvés (15), ladite partie médiane se raccordant tangentiellement à deux parties latérales de transition incurvées et présentant un sens de courbure inverse par rapport à celui des dits segments incurvés (15).

7. Conduite tubulaire flexible selon l'une quelconque des revendications précédentes, caractérisée par le fait que la longueur b du tronçon d'extrémité (12) de la seconde portée secondaire satisfait à la relation suivante :

$$b \geqq 0,5 \ e \ \text{et de préférence}$$
$$0,5 \ e \leqq b \leqq 2 \ e$$

e étant l'épaisseur de la bande profilée.

8. Conduite tubulaire flexible selon l'une quelconque des revendications précédentes, caractérisée par le fait que la longueur a du tronçon intermédiaire (13) en forme d'onde de la seconde portée secondaire satisfait à la relation suivante :

$$3 \ e \leqq a \leqq 8 \ e$$

e étant l'épaisseur de la bande profilée.

9. Conduite tubulaire flexible selon l'une quelconque des revendications précédentes, caractérisée par le fait que la hauteur d du tronçon intermédiaire en forme d'onde (13) de la seconde portée secondaire satisfait à la relation suivante :

$$0,5 \ e \leqq d \leqq 3,5 \ e$$

e étant l'épaisseur de la bande profilée.

10. Conduite tubulaire flexible selon l'une quelconque des revendications précédentes, caractérisée par le fait que l'épaisseur h de la couche tubulaire satisfait à la relation :

$$h \geqq 4,5 \ e$$

e étant l'épaisseur de la bande.

11. Conduite tubulaire flexible selon l'une quelconque des revendications précédentes, caractérisée par le fait que la longueur c du second tronçon de raccordement (11) de la seconde portée secondaire satisfait à la relation suivante :

$$c \leqq 4 \ e$$

9

EP 0 429 357 B1

e étant l'épaisseur de la bande profilée.

**12.** Conduite tubulaire flexible selon l'une quelconque des revendications précédentes, caractérisée par le fait que la largeur 1 de la bande profilée, c'est-à-dire la distance mesurée en sens axial entre les sommets des portées radiales convexes (8, 9) de la bande satisfait à la relation suivante :

$$50\ e \leqq l \leqq 100\ e$$

e étant l'épaisseur de la bande.

**13.** Conduite tubulaire flexible selon l'une quelconque des revendications précédentes, caractérisée par le fait eue le pas moyen P de l'hélice formée par l'enroulement, c'est-à-dire la distance mesurée en sens axial entre les premières portées radiales convexes (8, 8') de deux spires successives satisfait à la relation suivante :

$$0,05\ D \leqq P \leqq 0,5\ D$$

D étant le diamètre interne de la couche tubulaire formée.

## Patentansprüche

**1.** Flexible Rohrleitung mit mindestens einer rohrförmigen Lage, die von mindestens einem mit geringer Steigung schraubenförmig aufgewickelten Profilband gebildet ist, das einen Querschnitt im wesentlichen in Form eines länglichen S hat und bei dem aufeinanderfolgende Windungen ineinander greifen, wobei das Profilband einen Querschnitt aufweist, der von einem ersten (5) und einem zweiten (6) zylindrischen Hauptabschnitt gebildet ist, die koaxial sind, in Radialrichtung einen Abstand aufweisen und über einen zur Längsachse der Leitung geneigten Mittelteil (7) miteinander verbunden sind, wobei sowohl der erste als auch der zweite zylindrische Hauptabschnitt über einen ersten konvexen Radialteil (8) mit einem ersten zylindrischen Nebenabschnitt (10) und über einen zweiten konvexen Radialteil (9) mit einem zweiten Nebenabschnitt (11, 12, 13) verbunden ist, und wobei der erste Nebenabschnitt vom ersten zylindrischen Hauptabschnitt in Radialrichtung einen derartigen Abstand aufweist, dass er im aufgewickelten Zustand des Profilbandes im wesentlichen über seine gesamte Länge am zweiten Hauptabschnitt der benachbarten Windung (6") anliegt, wobei der zweite Nebenabschnitt ein Teilstück (11) zur Verbindung mit dem zweiten konvexen Radialteil (9), ein Endstück (12) und zwischen diesen beiden Stücken (11, 12) ein wellenförmiges Zwischenstück (13) umfasst, dessen konkave Seite vom zweiten Hauptabschnitt (6) abgewandt ist, und wobei der zweite Nebenabschnitt (11, 12, 13) so ausgeführt ist, dass sich im aufgewickelten Zustand des Bandes das Verbindungs-Teilstück (11) am ersten Hauptabschnitt (5') der benachbarten Windung abstützt, dadurch gekennzeichnet dass, im aufgewickelten Zustand des Bandes, das Endstück (12), mit seinem von dem Zwischenstück entfernten Ende, am ersten Hauptabschnitt (5') der benachbarten Windung anliegt.

**2.** Rohrleitung nach Anspruch 1, dadurch gekennzeichnet, daß das Endstück (12) zylindrisch ist und im wesentlichen über seine gesamte Länge am ersten Hauptabschnitt (5') der benachbarten Windung anliegt.

**3.** Rohrleitung nach Anspruch 1, dadurch gekennzeichnet, daß das Endstück leicht konisch ist und sich mit seinem Ende am ersten Hauptabschnitt (5') der benachbarten Windung abstützt.

**4.** Rohrleitung nach einem der Ansprüche 1 bis 3, dadurch gekennzeichnet, daß der Scheitel des Zwischenstücks (13) am ersten Nebenabschnitt (10') der benachbarten Windung anliegt.

**5.** Flexible Rohrleitung nach einem der Ansprüche 1 bis 4, dadurch gekennzeichnet, daß der mittlere Teil des wellenförmigen Zwischenstücks (13) einen abgerundeten Querschnitt aufweist und tangential an zwei seitliche Übergangsteile anschließt, die einwärts gekrümmt sind und eine Krümmungsrichtung aufweisen, die zu der des mittleren Teils entgegengesetzt ist.

**6.** Flexible Rohrleitung nach einem der Ansprüche 1 bis 4, dadurch gekennzeichnet, daß der mittlere Teil des wellenförmigen Zwischenstücks (13a) einen zylindrischen Mittelteil (14) umfaßt, der vorzugsweise im wesentlichen über seine gesamte Länge (f) mit dem ersten Nebenabschnitt (10') der benachbarten Windung in Berührung steht und von zwei einwärts gekrümmten Segmenten (15) umgeben ist, wobei der mittlere Teil tangential an zwei seitliche Übergangsteile anschließt, die einwärts gekrümmt sind und eine Krümmungsrichtung aufweisen, die zu der der einwärts gekrümmten Segmente (15) entgegengesetzt ist.

10

7. Flexible Rohrleitung nach einem der vorhergehenden Ansprüche, dadurch gekennzeichnet, daß die Länge b des Endstücks (12) des zweiten Nebenabschnitts die folgende Relation erfüllt:

$$b \cong 0.5 \, e, \text{ vorzugsweise}$$
$$0.5 \, e \leqq b \leqq 2 \, e,$$

wobei e die Dicke des Profilbandes ist.

8. Flexible Rohrleitung nach einem der vorhergehenden Ansprüche, dadurch gekennzeichnet, daß die Länge a des wellenförmigen Zwischenstücks (13) des zweiten Nebenabschnitts die folgende Relation erfüllt:

$$3 \, e \leqq a \leqq 8 \, e,$$

wobei e die Dicke des Profilbandes ist.

9. Flexible Rohrleitung nach einem der vorhergehenden Ansprüche, dadurch gekennzeichnet, daß die Höhe d des wellenförmigen Zwischenstücks (13) des zweiten Nebenabschnitts die folgende Relation erfüllt:

$$0.5 \, e \leqq d \leqq 3.5 \, e,$$

wobei e die Dicke des Profilbandes ist.

10. Flexible Rohrleitung nach einem der vorhergehenden Ansprüche, dadurch gekennzeichnet, daß die Dicke h der rohrförmigen Schicht die Relation erfüllt:

$$h \cong 4.5 \, e,$$

wobei e die Dicke des Bandes ist.

11. Flexible Rohrleitung nach einem der vorhergehenden Ansprüche, dadurch gekennzeichnet, daß die Länge c des zweiten Verbindungs-Teilstücks (11) des zweiten Hilfsabschnitts die folgende Relation erfüllt:

$$c \leqq 4 \, e,$$

wobei e die Dicke des Profilbandes ist.

12. Flexible Rohrleitung nach einem der vorhergehenden Ansprüche, dadurch gekennzeichnet, daß die Länge $\ell$ des Profilbandes, d.h. der axial gemessene Abstand zwischen den Scheiteln der konvexen Radialabschnitte (8, 9) des Bandes, die folgende Relation erfüllt:

$$50 \, e \leqq \ell \leqq 100 \, e,$$

wobei e die Dicke des Bandes ist.

13. Flexible Rohrleitung nach einem der vorhergehenden Ansprüche, dadurch gekennzeichnet, daß die mittlere Steigung P der durch Aufwickeln gebildeten Schraube, d.h. der axial gemessene Abstand zwischen den ersten konvexen Radialabschnitten (8, 8') zweier aufeinander folgender Windungen, die folgende Relation erfüllt:

$$0,05 \, D \leqq P \leqq 0,5 \, D,$$

wobei D der Innendurchmesser der gebildeten rohrförmigen Schicht ist.

## Claims

1. Flexible tubular conduit comprising at least one tubular layer constituted by at least one profiled band having a cross-section substantially in the shape of an elongated S, wound helically with a small pitch and with interlocking of the successive turns, the said profiled band having a cross-section formed from first (5) and second (6) main portions which are cylindrical, coaxial, radially spaced and joined by a central portion (7) inclined in relation to the longitudinal axis of the conduit, each of the first and second main cylindrical portions being joined by a first convex radial portion (8) to a first cylindrical secondary portion (10) and by a second convex radial portion (9) to a second secondary portion (11, 12, 13), and the first secondary portion being radially spaced from the first main cylindrical portion by a distance such that, in the wound state of the profiled band, it is substantially applied over its entire length against the second main portion of an adjacent turn (6"), wherein the second secondary portion comprises a section (11) for connecting to the second convex radial portion (9) an end section (12) and, between the said sections (11, 12), a wave-shaped intermediate section (13) whose concavity is turned away from the second main portion (6), and wherein the second secondary portion (11, 12, 13) is arranged so that, in the wound state of the band, the said connecting section (11) bears on the first main portion (5') of the other adjacent turn, characterised in that, in the wound state of the band, the end section (12) bears at its end remote from the intermediate section on the said first main portion (5') of the other adjacent turn.

2. Tubular conduit according to Claim 1, characterised in that the end section (12) is cylindrical and is applied substantially over its entire length against the said first main portion (5') of the other adjacent turn.

3. Tubular conduit according to Claim 1, characterised in that the end section is slightly tapered and bears at its end on the said first main portion (5') of the other adjacent turn.

4. Tubular conduit according to any one of Claims 1 to 3, characterised in that the crest of the intermediate section (13) is applied against the first secondary portion (10') of the said other adjacent turn.

5. Flexible tubular conduit according to any one of Claims 1 to 4, characterised in that the median portion of the said wave-shaped intermediate section (13) has a cross-section of rounded shape and is tangentially connected to two curved lateral transition portions and having a direction of curvature which is inverted in relation to that of the said median portion.

6. Flexible tubular conduit according to any one of Claims 1 to 4, characterised in that the median portion of the said wave-shaped intermediate section (13a) comprises a cylindrical central portion (14) preferably substantially in contact over its entire length (f) with the first secondary portion (10') of the said other adjacent turn and which is flanked by two curved segments (15), the said median portion being tangentially connected to two curved lateral transition portions and having a direction of curvature which is inverted in relation to that of the said cur-ved segments (15).

7. Flexible tubular conduit according to any one of the preceding claims, characterised in that the length b of the end section (12) of the second secondary portion satisfies the following relationship:
$$b \geqq 0.5 \, e \text{ and preferably}$$
$$0.5 \, e \leqq b \leqq 2 \, e$$
e being the thickness of the profiled band.

8. Flexible tubular conduit according to any one of the preceding claims, characterised in that the length a of the wave-shaped intermediate section (13) of the second secondary portion satisfies the following relationship:
$$3 \, e \leqq a \leqq 8 \, e$$
e being the thickness of the profiled band.

9. Flexible tubular conduit according to any one of the preceding claims, characterised in that the height d of the wave-shaped intermediate section (13) of the second secondary portion satisfies the following relationship:
$$0.5 \, e \leqq d \leqq 3.5 \, e$$
e being the thickness of the profiled band.

10. Flexible tubular conduit according to any one of the preceding claims, characterised in that the thickness h of the tubular layer satisfies the relationship:
$$h \geqq 4.5 \, e$$
e being the thickness of the band.

11. Flexible tubular conduit according to any one of the preceding claims, characterised in that the length c of the second section (11) for connecting the second secondary portion satisfies the following relationship:
$$c \leqq 4 \, e$$
e being the thickness of the profiled band.

12. Flexible tubular conduit according to any one of the preceding claims, characterised in that the width 1 of the profiled band, that is to say the distance measured in the axial direction between the crests of the convex radial portions (8, 9) of the band satisfies the following relationship:
$$50 \, e \leqq l \leqq 100 \, e$$
e being the thickness of the band.

13. Flexible tubular conduit according to any one of the preceding claims, characterised in that the average pitch P of the helix formed by the winding, that is to say the distance measured in the axial direction between the first convex radial portions (8, 8') of two successive turns satisfies the following relationship:

$$0.05 \, D \leqq P \leqq 0.5 \, D$$

D being the internal diameter of the tubular layer formed.

*Fig. 1*

*Fig. 2*

14

Fig. 3

Fig. 4

Fig. 5

Fig. 6

Fig. 7